# FASCICULE DE BREVET EUROPEEN

(11) **EP 0 794 448 B1**
(45) Date de publication et mention de la délivrance du brevet: **03.07.2002**
(21) Numéro de dépôt: 97400496.2
(22) Date de dépôt: 04.03.1997
(51) Int. Cl.: G02B 27/01

(54) **Dispositif de visualisation pour viseur de casque**
Anzeigevorrichtung für Helmvisier
Display device for helmet visor

(30) Priorité: 08.03.1996 FR 9602961
(43) Date de publication de la demande: 10.09.1997
(73) Titulaire: THALES AVIONICS S.A., 78141 Vélizy Villacoublay Cédex (FR)
(72) Inventeur: Bignolles, Laurent, Thomson-CSF, SCPI, 94117 Arcueil Cedex (FR); Gerbe, Jean-Pierre, Thomson-CSF, SCPI, 94117 Arcueil Cedex (FR)
(74) Mandataire: Guérin, Michel

(56) Documents cités:
- EP-A- 0 288 365
- US-A- 5 303 085

## Description

La présente invention a pour objet un dispositif permettant la réalisation de viseurs de casque ergonomiques de masse allégée, dans lesquels une image lumineuse collimatée est observée en superposition avec la vision du paysage extérieur.

Ce type de viseurs de casque est utilisé dans le domaine aéronautique, l'observateur étant le pilote d'un avion ou d'un hélicoptère.

En particulier, les avions d'armes ou les hélicoptères de combat nécessitent la présentation d'informations de pilotage et de conduite de tir superposées au paysage extérieur. Ce rôle peut être assuré par le viseur tête haute, présent dans tous les avions d'armes et certains hélicoptères. L'inconvénient de ce type de visualisation est qu'elle ne peut présenter une image que dans un champ limité et toujours centré dans l'axe de l'avion alors que le pilote peut avoir à effectuer des visées éloignées de l'axe de l'avion. C'est pourquoi à l'heure actuelle, des dispositifs de visualisation sont intégrés au niveau du casque du pilote, le pilote entraînant le champ de visualisation avec lui.

Selon l'art connu par exemple EP 0 288 365, ces dispositifs actuels comprennent au niveau de la visière un combineur et un ensemble de dispositif de projection d'images intégré dans le casque et capable de projeter sur le combineur de la visière, des informations venant se superposer au paysage extérieur transmis vers les yeux du pilote équipé d'un tel casque.

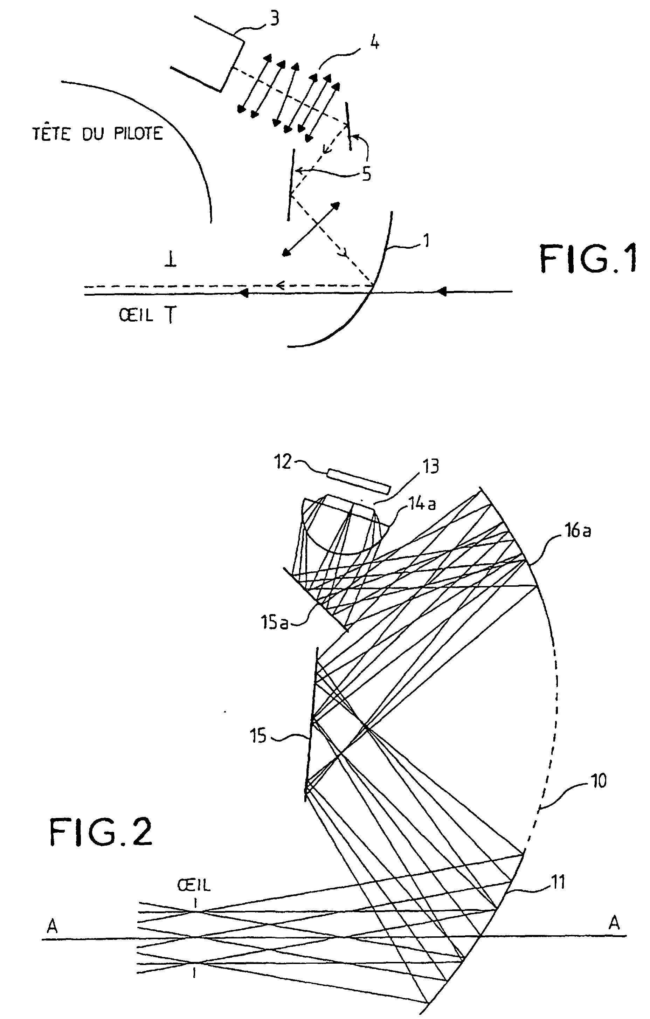

La figure 1 schématise un tel type de dispositif. Le combineur 1 comprend un traitement semi-réfléchissant à réflexion adaptée ayant la propriété de réfléchir efficacement la lumière pour des longueurs d'onde et correspondant à celles du tube. La lumière qui ne satisfait pas à la condition d'adaptation est transmise par le traitement semi-réfléchissant avec de faibles pertes par réflexion, en l'occurrence il s'agit du paysage extérieur. Alors que la lumière collimatée depuis l'ensemble de projection satisfait aux combinaisons particulières de manière à pouvoir être réfléchie vers le pilote.

L'ensemble de projection comprend un imageur de type tube cathodique 3, une optique relais 4 et des miroirs de repliement 5.

Comme l'illustre la figure 1, de tels dispositifs optiques fonctionnent hors axe puisque l'axe optique du système est différent de celui du combineur ; pour corriger les aberrations optiques liées à un tel fonctionnement, l'optique relais 4 doit comprendre notamment un certain nombre de lentilles, dont certaines asphériques accompagnées d'une mécanique adaptée. Cette optique relais représente une charge pondérale au niveau du casque du pilote qui constitue un problème majeur, intensifié par les phénomènes d'accélération.

Le but de l'invention est de remédier à ce problème de charge, dû à l'optique relais, en allégeant le dispositif optique entre le générateur d'image et le combineur.

Selon l'invention, le dispositif de visualisation pour viseur de casque comportant :
- une visière ;
- un combineur à travers lequel un observateur peut voir une scène, au niveau de la visière du casque, situé sur l'axe de vision du dispositif de visualisation, ledit combineur comportant un premier film holographique et étant intégré à la visière ;
- un ensemble de projection, comportant un imageur comportant une source lumineuse et un dispositif d'affichage, émettant un faisceau porteur d'informations, une optique relais et des moyens de renvoi pour diriger le faisceau lumineux porteur d'informations vers le combineur qui superpose en direction de l'observateur, la scène et le faisceau d'informations :
est caractérisé en ce que :
l'optique relais comprend au moins un élément à réflexion sélective ayant une bande de réflexion correspondante à la bande spectrale d'émission de l'imageur, situé hors axe de vision du dispositif de visualisation dans lequel est inscrite une fonction de phase, de manière à corriger des aberrations optiques, sur le faisceau d'informations transmis à l'observateur, ledit élément à réflexion sélective étant un second élément holographique intégré à la visière du casque.

Grâce à cet élément, le nombre des lentilles et notamment de lentilles asphériques utilisées dans les dispositifs classiques d'optique relais, peut être fortement réduit. Selon une variante préférentielle de l'invention, cet élément peut être du type holographique, dans lequel sont inscrites des franges d'interférences avec un pas Λ variable selon une direction parallèle au plan du film. Il peut être avantageusement intégré au niveau de la visière, en complément d'un autre élément holographique placé au niveau du combineur, en remplacement du traitement semi-réfléchissant.

Selon une autre variante, le dispositif de visualisation comprend un élément à transmission adaptée du type lentille diffractive présentant un pas de réseau variable selon une direction parallèle au plan de la lentille et donc normale par rapport à l'axe optique de l'optique relais.

L'invention aussi pour objet un casque de pilote d'aéronef comprenant au moins un dispositif de visualisation selon l'invention, en version monoculaire ou binoculaire.

L'invention sera mieux comprise et d'autres avantages apparaîtront à la lecture de la description qui va suivre, donnée à titre non limitatif et grâce aux figures annexées, parmi lesquelles :
- la figure 1 illustre le principe d'un viseur de casque selon l'art connu ;
- la figure 2 illustre un dispositif de visualisation pour viseur de casque, selon l'invention ;
- les figures 3a, 3b, 3c, 3d illustrent des configurations monoculaires de casque de pilote comprenant deux hologrammes ;
- la figure 4 schématise un dispositif de visualisation selon l'invention, comprenant une lentille diffractive ;
- la figure 5 illustre un exemple de lentille diffractive utilisée comme élément à transmission adaptée.

Selon une première variante de l'invention, le dispositif de visualisation comprend un élément de réflexion adapté intégré à la visière du casque. Une telle configuration est illustrée en figure 2.

Le casque du pilote comprend une visière 10 comportant un film holographique 11 constitutif du combineur.

Typiquement, ce film holographique 11 peut être réfléchissant pour une bande spectrale centrée sur celle du tube et transparent pour les autres longueurs d'onde dans le visible. Cet élément holographique est placé au niveau d'un axe AA' centré au niveau de l'oeil du pilote. Le faisceau lumineux porteur d'informations émet dans ce cas dans la bande spectrale pour laquelle l'hologramme 11 est réfléchissant.

La visière 10 comprend un second élément holographique 16a présentant des caractéristiques différentes du film holographique 11. Il est préférentiellement choisi de manière à posséder une plus grande largeur spectrale et une plus grande largeur angulaire en réflexion. Cet élément holographique a pour fonction de corriger des aberrations optiques des images transmises par l'imageur 13 et arrivant sur l'oeil du pilote. C'est-à-dire de réfléchir dans une direction adaptée, un rayonnement incident pour restituer vers l'oeil du pilote, des images peu déformées malgré un cheminement hors axe optique entre l'imageur 13 et l'oeil du pilote.

Les films holographiques 11 et 16a peuvent avantageusement être des films de gélatine dans lesquels on a enregistré des franges d'interférences. On introduit ainsi des variations périodiques d'indice optique au niveau du film, ces variations d'indice diffractent alors un faisceau de lecture et permettent la transmission ou la réflexion dans une direction privilégiée.

Il est possible d'inscrire à l'enregistrement des variations d'indice avec un pas de réseau variable de manière à introduire une fonction de phase dans le film holographique. Cette fonction de phase permet de réfléchir dans des directions différentes deux faisceaux lumineux incidents arrivant selon la même incidence sur le film holographique mais en des points différents sur ledit film. L'introduction de cette fonction de phase permet en assurant une déviation locale, de supprimer l'emploi actuel de lentilles asphériques (ainsi que la mécanique associée). Il devient possible d'utiliser essentiellement des lentilles sphériques classiques de configuration simple et légère telle que la lentille 14a illustrée en figure 2.

Le dispositif d'illumination peut'être constitué d'une source laser miniature 12, typiquement il peut s'agir d'un laser YAG doublé en fréquence et émettant dans le vert à 532 nm. Cette source laser illumine une matrice à cristal liquide, constituant l'imageur 13. Les images issues de la matrice à cristal liquide sont transmises via l'optique relais 14 comprenant la lentille sphérique 14a et le film holographique 16 vers le combineur 11 au moyen de miroir de renvoi 15. La figure 2 illustre une configuration comprenant deux miroirs 15a et 15b. Ces miroirs peuvent typiquement être des miroirs plans diélectriques, très sélectifs en longueur d'onde et parfaitement adaptés à la longueur d'onde d'émission de la source laser.

Les films holographiques 11 et 16a intégrés à la visière du casque peuvent typiquement être séparés d'environ 70 mm et présenter une largeur voisine de 20 à 30 mm pour l'hologramme 11 et une largeur voisine de 30 à 40 mm pour l'élément 16a.

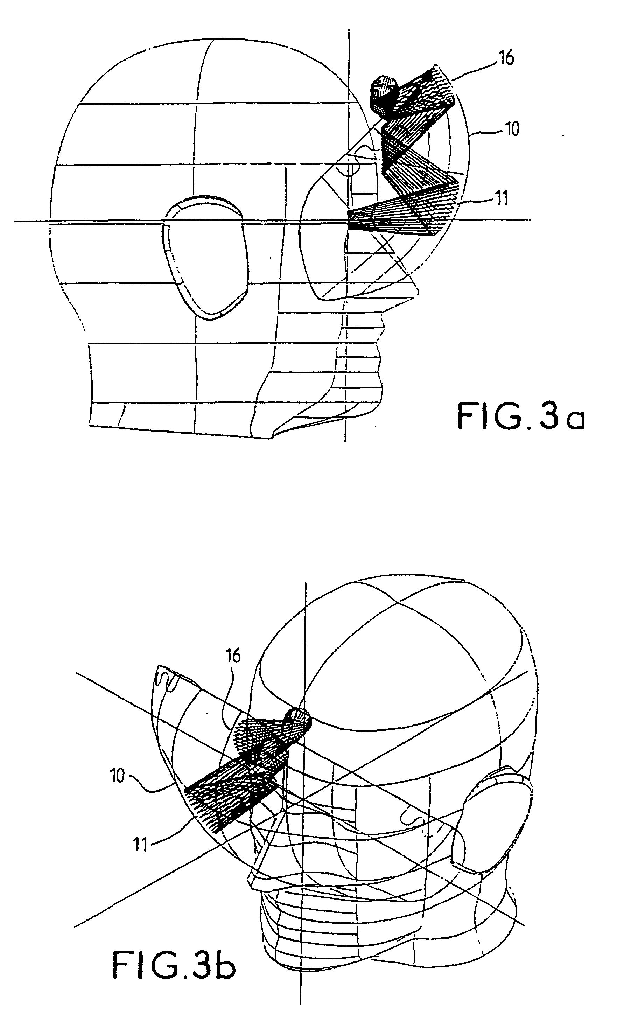

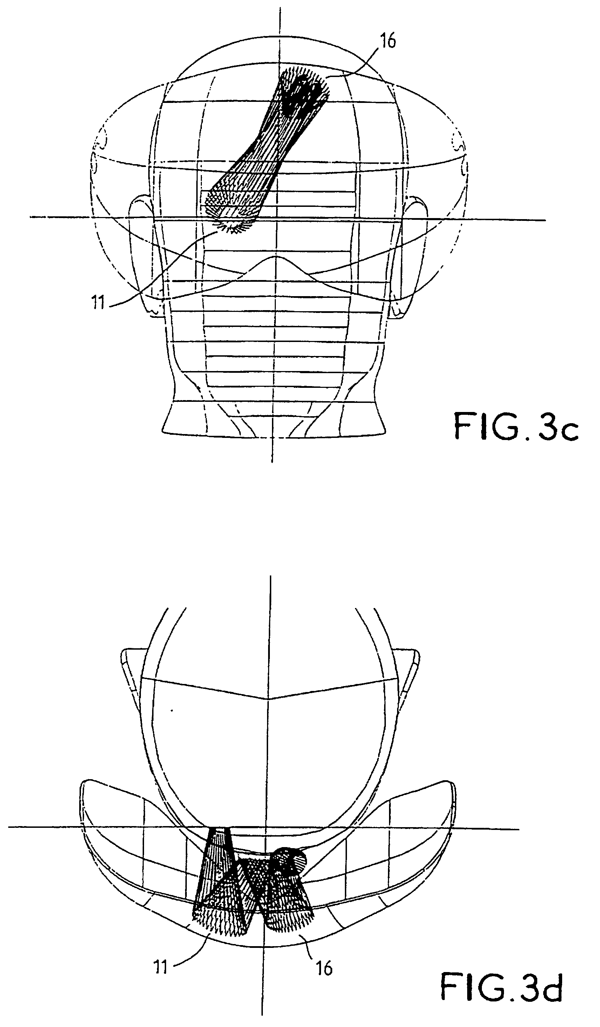

La figure 3 illustre un casque équipé du dispositif optique décrit ci-dessus. La figure 3a correspond à une vue de profil du casque, la figure 3b montre une vue en perspective du casque dans sa version monoculaire permettant de projeter des informations au niveau d'un oeil du pilote. Selon cette version de casque, le dispositif de projection est intégré dans la partie supérieure du casque. L'élément holographique 16a est intégré au niveau supérieur de la visière 10, le combineur étant situé dans un plan inférieur au niveau de l'axe optique passant par l'oeil droit du pilote comme illustré en figures 3c et 3d qui représentent respectivement une vue de face et une vue de dessus du pilote équipé de son casque. Le principal avantage d'un tel équipement est l'allégement procuré par l'utilisation d'une seule lentille sphérique et non plus de tout un ensemble de lentilles dont des lentilles asphériques. L'essentiel du poids du dispositif optique étant gouverné par le nombre de lentilles et par la mécanique environnante. On peut envisager un gain en légèreté supérieure à 50 % ce qui représente un atout majeur dans l'équipement du pilote.

L'utilisation de deux hologrammes 11 et 16a est envisagée dans le cas d'une source monochrome. Pour projeter des informations trichromes, il est possible de superposer trois films holographiques 16a₁, 16a₂, 16a₃, réflecteurs pour les trois couleurs classiques rouge, vert, bleu, ainsi que trois films 11a₁, 11a₂ et 11a₃ au niveau du combineur. Dans ce cas, plusieurs matrices à cristal liquide associées à plusieurs sources monochromes sont utilisées au niveau de l'imageur.

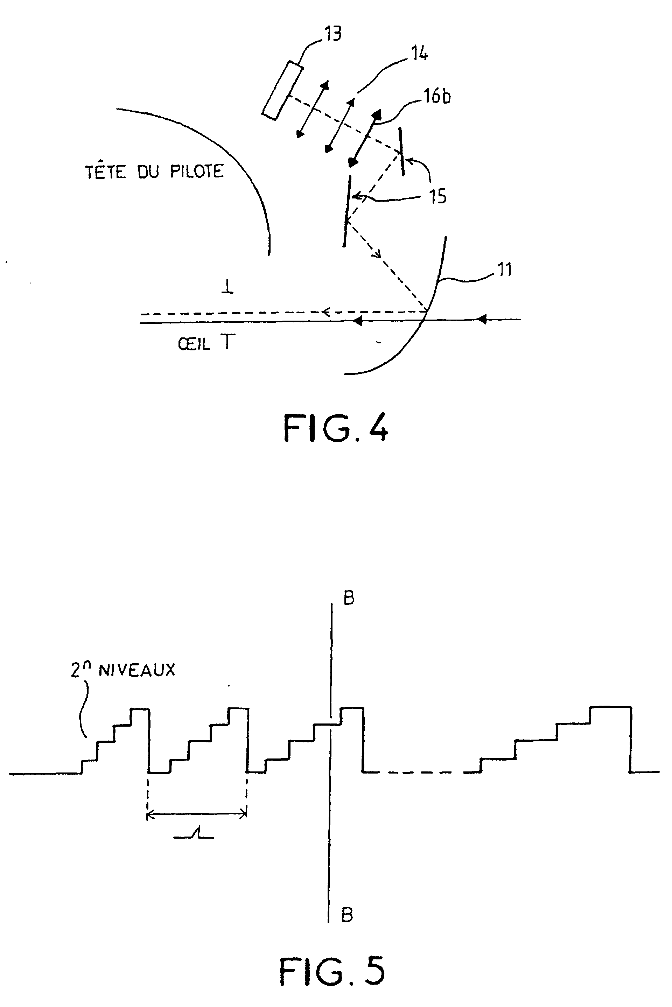

Selon une autre variante de l'invention, le dispositif de visualisation pour viseur de casque comprend comme élément à transmission adaptée 16, une lentille diffractive. Cette lentille diffractive 16b est placée au niveau de l'optique relais 14. Cette lentille diffractive présente une fonction de phase permettant de remplacer également plusieurs lentilles. La fonction de phase est prise non de révolution pour corriger le système optique non centré à cause de l'utilisation hors axe du combineur. Plus précisément, il s'agit d'une lentille dont la surface est localement gravée comme illustrée en figure 5. Une telle lentille présente un réseau en relief de pas Λ voisin du micron, les 2ⁿ niveaux étant obtenus par n opérations de masquage successives. De manière générale, un réseau de diffraction diffracte majoritairement l'énergie incidente selon des ordres +1 et -1. Pour diffracter majoritairement dans un ordre ou dans l'autre on augmente le nombre de niveaux 2ⁿ. Typiquement avec 2³ niveaux et donc 3 phases de masquage, on est en mesure d'obtenir une efficacité de 90 % dans une seule direction de diffraction, ce qui est suffisant pour s'affranchir des ordres parasites.

Pour assurer la fonction de phase capable de corriger le système optique, le pas Λ varie le long de tout axe perpendiculaire à l'axe optique BB de la lentille diffractive, indiqué en figure 5.

L'emploi d'une telle lentille permet également de réduire fortement le nombre de lentilles couramment utilisé dans les dispositifs de l'art connu.

De même que dans la première variante de l'invention, l'imageur peut avantageusement être allégé par rapport à un imageur du type tube cathodique en utilisant une source monochrome associée à une matrice à cristal liquide.

## Revendications

1. Dispositif de visualisation pour viseur de casque comportant :
- une visière (10);
- un combineur (11) à travers lequel un observateur peut voir une scène, au niveau de la visière (10) du casque, situé sur l'axe de vision (AA') du dispositif de visualisation, ledit combineur comportant un premier film holographique et étant intégré à la visière ;
- un ensemble de projection, comportant un imageur (13) comportant une source lumineuse et un dispositif d'affichage, émettant un faisceau porteur d'informations, une optique relais (14) et des moyens de renvoi (15) pour diriger le faisceau lumineux porteur d'informations vers le combineur qui superpose en direction de l'observateur, la scène et le faisceau d'informations :
**caractérisé en ce que** :
l'optique relais comprend au moins un élément à réflexion sélective ayant une bande de réflexion correspondante à la bande spectrale d'émission de l'imageur, situé hors axe de vision (AA') du dispositif de visualisation dans lequel est inscrite une fonction de phase, de manière à corriger des aberrations optiques, sur le faisceau d'informations transmis à l'observateur, ledit élément à réflexion sélective étant un second élément holographique (16a) intégré à la visière du casque.

2. Dispositif de visualisation selon la revendication 1, **caractérisé en ce que** l'imageur (13) comprend une source et une matrice à cristal liquide, la source émettant dans une bande spectrale pour laquelle le second élément holographique (16a) est adapté en réflexion ou transmission.

3. Casque de pilote d'aéronef, **caractérisé en ce qu'**il comporte au moins un dispositif de visualisation selon l'une des revendications 1 à 2.

## Patentansprüche

1. Anzeigevorrichtung für ein Helmvisiergerät,
- mit einer Visierscheibe (10),
- mit einem Kombinierorgan (11), durch das ein Beobachter eine Szene in Höhe der Visierscheibe (10) des Helms gemäß der Sichtachse (AA') der Anzeigevorrichtung beobachten kann, wobei das Kombinierorgan eine erste holographische Schicht besitzt und in die Visierscheibe integriert ist,
- mit einer Projektionseinheit, die einen Bildgenerator (13) mit einer Lichtquelle und einer Displayvorrichtung, die einen eine Information tragenden Lichtstrahl aussendet, eine Relaisoptik (14) und Umlenkmittel (15) enthält, um den die Information tragenden Lichtstrahl zum Kombinierorgan zu lenken, welches die äußere Szene und den die Information tragenden Lichtstrahl in Richtung zum Beobachter überlagert, **dadurch gekennzeichnet, daß** die Relaisoptik mindestens ein selektives Reflexionselement enthält, dessen Reflexions-Frequenzband dem Spektralband der Emission des Bildgenerators entspricht, das außerhalb der Sichtachse (AA') der Anzeigevorrichtung liegt und in das eine Phasenfunktion eingetragen ist, derart, daß optische Verzerrungen auf dem zum Beobachter übertragenen Informationsstrahl korrigiert werden, und daß das selektive Reflexionselement ein zweites holographisches Element (16a) ist, das in die Visierscheibe des Helms integriert ist.

2. Anzeigevorrichtung nach Anspruch 1, **dadurch gekennzeichnet, daß** der Bildgenerator (13) eine Lichtquelle und eine Flüssigkristallmatrix enthält, wobei die Quelle in einem Spektralband emittiert, für das das zweite holographische Element (16a) in Reflexions- oder Transmissionsrichtung wirksam ist.

3. Helm eines Flugzeugpiloten, **dadurch gekennzeichnet, daß** er mindestens eine Anzeigevorrichtung gemäß einem der Ansprüche 1 und 2 enthält.

## Claims

1. Display device for helmet visor comprising:
- a visor (10);
- a combiner (11) through which an observer may see a scene, at the helmet visor (10), located in the axis of vision (AA') of the display device, the said combiner comprising a first holographic film and being integral with the visor;
- a projection assembly, comprising an imager (13) comprising a light source and a display device, emitting an information-carrying beam, a relay optic (14) and reflection means (15) to direct the information-carrying light beam towards the combiner which superimposes, in the direction of the observer, the scene and the information beam:
**characterized in that**:
the relay optic comprises at least one selective reflection element having a reflection band corresponding to the spectral emission band of the imager, located off the axis of vision (AA') of the display device in which a phase function is recorded so as to correct optical aberrations on the information beam transmitted to the observer, the said selective reflection element being a second holographic element (16a) integrated in the helmet visor.

2. Display device according to Claim 1, **characterized in that** the imager (13) comprises a source and a liquid crystal matrix, the source emitting in a spectral band for which the second holographic element (16a) is matched in reflection or transmission.

3. Aircraft pilot's helmet, **characterized in that** it comprises at least one display device according to either of Claims 1 and 2.
